# EUROPÄISCHE PATENTANMELDUNG

(11) **EP 4 390 767 A1**
(43) Veröffentlichungstag der Anmeldung: **26.06.2024**
(21) Anmeldenummer: 23215606.7
(22) Anmeldetag: 11.12.2023
(51) Int. Cl.: G06N 3/0455, G06N 3/088, G06N 3/084

(54) **VERFAHREN ZUM TRAINIEREN EINES SYSTEMS ZUM MASCHINELLEN LERNEN ZUR ERZEUGUNG VON BAUPLÄNEN**

(30) Priorität: 20.12.2022 DE 102022134033
(71) Anmelder: thyssenkrupp Marine Systems GmbH, 24143 Kiel (DE); thyssenkrupp AG, 45143 Essen (DE)
(72) Erfinder: Neustock, Jonas, 24340 Eckernförde (DE)
(74) Vertreter: thyssenkrupp Intellectual Property GmbH

(57) **Zusammenfassung**

Die vorliegende Erfindung betrifft ein Verfahren zur Bereitstellung einheitlicher Trainingsdaten zur Training einer künstlichen Intelligenz, wobei erste Datensätze 11 und zweite Datensätze 12 bereitgestellt werden, wobei die ersten Datensätze 11 2D-Informationen enthalten und wobei die zweiten Datensätze 12 3D-Informationen enthalten, wobei die ersten Datensätze 11 durch einen ersten Encoder 21 auf der Basis eines neuronalen Netzwerkes in einen latenten Merkmalsraum als erste komprimierte Datensätze 31 übertragen werden, wobei die ersten komprimierten Datensätze 31 durch einen ersten Decoder 41 auf der Basis eines neuronalen Netzwerkes zu ersten entpackten Datensätzen umgewandelt werden, wobei die ersten Datensätze 11 mit den ersten entpackten Datensätzen zur Bestimmung eines ersten Verlustfaktors 51 verglichen werden, wobei die zweiten Datensätze 12 durch einen zweiten Encoder 22 auf der Basis eines neuronalen Netzwerkes in einen latenten Merkmalsraum als zweite komprimierte Datensätze 32 übertragen werden, wobei die zweiten komprimierten Datensätze 32 durch einen zweiten Decoder 42 auf der Basis eines neuronalen Netzwerkes zu zweiten entpackten Datensätzen umgewandelt werden, wobei die zweiten Datensätze 12 mit den zweiten entpackten Datensätzen 32 zur Bestimmung eines zweiten Verlustfaktors 52 verglichen werden, wobei die ersten komprimierten Datensätze 31 mit den zweiten komprimierten Datensätzen 32 zur Bestimmung einer Distanzfunktion 60 verglichen werden, wobei aus dem ersten Verlustfaktor 51, dem zweiten Verlustfaktor 52 und dem Komprimierungsverlustfaktor und der Distanzfunktion 60 ein Totalverlustfaktor 70 gebildet wird, wobei der erste Encoder 21, der erste Decoder 41, der zweite Encoder 22 und der zweite Decoder 42 gemeinsam trainiert und optimiert werden auf die Minimierung des Totalverlustfaktors 70.

## Beschreibung

Die Erfindung betrifft ein Verfahren, um ein System zum maschinellen Lernen, welches Baupläne in 3D erzeugen soll, auch mit dem bereits vorhandenen Fundus an Bauplänen, die jedoch nur in 2D vorliegen zu trainieren, um damit durch eine breitere Trainingsgrundlage bessere Baupläne für neue Projekte realisieren zu können und somit besser Produkte nach diesen Bauplänen bauen zu können.

In vielen Bereichen soll zunehmend künstliche Intelligenz eingesetzt werden, um Arbeitsvorgänge zu optimieren. Insbesondere soll aus bereits bestehenden Projekten die Erfahrung durch Nutzung solcher selbstlernenden Systeme auch für zukünftige Projekte genutzt werden.

Ein Beispiel hierfür sind zum Beispiel die Planung beispielswiese der Verkabelung in einem Schiff. Diese wurde bisher für jede Schiffsklasse manuell durchgeführt, was bei einer hohen Integrationsdichte aufwändig ist. Daher besteht der Wunsch, solche Arbeitsvorgänge zu unterstützen, indem eine künstliche Intelligenz aus Basis bisheriger Planungen trainiert wird. Zu diesem Zweck kann man die bei bisherigen Planungen erstellenden Unterlagen zum Training einer künstlichen Intelligenz verwenden. Dieses ermöglicht die Verwendung einer breiteren Know How Basis gegenüber dem Fachmann, der nur auf eine begrenzte Menge an realisierten Projekten zurückgreifen kann. Damit ist es möglich, durch eine breitere Basis an Erfahrungsdaten effiziente Baupläne zu entwerfen und anschließend nach diesen effizienteren Bauplänen auch effizientere Produkte zu bauen.

Hieraus ergibt sich jedoch eine Herausforderung. Heutzutage erfolgt die Planung üblicherweise mit Hilfe von 3D Modellen. Dieses Verfahren ist jedoch vergleichsweise jung, weshalb es nur eine sehr kleine Anzahl an Daten gibt, die zum Training verwendet werden können. Auf der anderen Seite gibt es aus älteren Projekten extrem viele Daten, die jedoch nur als 2D-Zeichnungen vorliegen.

Würde man jedoch die 2D Daten direkt für das Training verwenden, so würde als Ergebnis auch nur eine 2D Planung erzeugt werden.

Die zugrundeliegende Aufgabe ist es also ein Objekt nach einem besonders optimierten Bauplan zu erstellen. Dazu ist es notwendig, einen solchen optimierten Bauplan zu erstellen. Und dazu wiederrum stellt sich die Aufgabe eines umfassenden Trainings mit möglichst vielen historischen Daten für eine künstliche Intelligenz. Und somit stellt sich eben weiter die Aufgabe eine möglichst breite Datengrundlage zu schaffen, eben möglichst auch unter Verwendung von alten 2D-Daten zur letztendlichen Erstellung eines 3D-Bauplanbes und daraus eines Objekts nach diesem Bauplan.

Daher stellt sich die Aufgabe, Daten aus bisherigen 2D-Planungen als auch aus aktuellen 3D-Planungen zu verwenden, um eine künstliche Intelligenz zu trainieren. Dieses setzt voraus, dass sowohl die 2D-Daten als auch die 3D-Daten in einer gleichen Art vorliegen und somit beide, alternativ oder nebeneinander, für das Training einer künstlichen Intelligenz verwendet werden können.

Aus dem technischen Bereich der Bildmanipulation ist bekannt, einen Encoder und einen Decoder zur Datenreduktion von Bilddaten zu verwenden. Mit dem Encoder wird das Ausgangsbild in einen sogenannten latent space übertragen und mit dem Decoder wird aus dem latent space wieder ein Bild. Zur Erzeugung des Encoders und des Decoders wird heutzutage ein neuronales Netz verwendet. Das Trainieren des neuronalen Netzes erfolgt derart, dass nach dem Durchlauf des Ausgangsbildes durch den Encoder und den Decoder das erzeugte Bild mit dem Ausgangsbild verglichen und der Datenverlust bestimmt wird. Das Training erfolgt dann darauf, dass der Verlust durch Komprimieren und Wiederherstellen minimiert wird.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Bereitstellung einheitlicher Trainingsdaten zur Training einer künstlichen Intelligenz auf einem EDV-System. Es werden erste Datensätze und zweite Datensätze dem EDV-System bereitgestellt. Die ersten Datensätze enthalten 2D-Informationen und die zweiten Datensätze enthalten 3D-Informationen. Beispielsweise stammen die 2D-Informationen aus älteren Projekten, können beispielsweise daher auch gegebenenfalls nur ausgedruckt vorliegen. Aus neueren Projekten sind heutzutage hingegen oft 3D Daten vorhanden, die Menge ist jedoch begrenzt. Die ersten Datensätze werden durch einen ersten Encoder auf der Basis eines neuronalen Netzwerkes in einen latenten Merkmalsraum als erste komprimierte Datensätze übertragen. Die komprimierten Datensätze liegen dann insbesondere in einem sogenannten Latent Space vor. Weiter werden die ersten komprimierten Datensätze durch einen ersten Decoder auf der Basis eines neuronalen Netzwerkes zu ersten entpackten Datensätzen umgewandelt. Die ersten Datensätze werden mit den ersten entpackten Datensätzen zur Bestimmung eines ersten Verlustfaktors verglichen. Dieses entspricht soweit dem üblichen Vorgehen und im Normalfall würde nun das Training so durchgeführt werden, dass der erste Verlustfaktor minimal ist. Dieses wird jedoch erfindungsgemäß eben nicht so durchgeführt. Vielmehr gibt es parallel einen zweiten entsprechenden Prozess. Die zweiten Datensätze werden durch einen zweiten Encoder auf der Basis eines neuronalen Netzwerkes in einen latenten Merkmalsraum als zweite komprimierte Datensätze übertragen. Weiter werden die zweiten komprimierten Datensätze durch einen zweiten Decoder auf der Basis eines neuronalen Netzwerkes zu zweiten entpackten Datensätzen umgewandelt. Die zweiten Datensätze werden mit den zweiten entpackten Datensätzen zur Bestimmung eines zweiten Verlustfaktors verglichen. Entscheidend ist nun, dass für das Training korrelierende erste Datensätze und zweite Datensätze verwendet werden. Dadurch können und werden die ersten komprimierten Datensätze mit den zweiten komprimierten Datensätzen zur Bestimmung einer Distanzfunktion verglichen. Somit stehen für die Optimierung genau drei Parameter zur Verfügung alle zusammen und gemeinsam optimiert werden. Der trainierte erste Encoder, der trainierte zweite Encoder und der trainierte zweite Decoder werden auf dem EDV-System gespeichert. Diese sind notwendige Zwischenprodukte, um zunächst eine breite Datenbasis bereitstellen zu können, damit dann eine künstliche Intelligenz besonders effizient trainieren zu können, um dann mit der künstlichen Intelligenz besonders effiziente Baupläne erstellen zu können und anhand dieser Baupläne dann das Objekt herzustellen.

In einer weiteren Ausführungsform der Erfindung wird aus dem ersten Verlustfaktor, dem zweiten Verlustfaktor und der Distanzfunktion wird ein Totalverlustfaktor gebildet. Der erste Encoder, der erste Decoder, der zweite Encoder und der zweite Decoder werden somit gemeinsam trainiert und werden gemeinsam optimiert auf die Minimierung des Totalverlustfaktors.

In einer weiteren Ausführungsform der Erfindung wird ein Komprimierungsverlustfaktor ermittelt. Aus dem ersten Verlustfaktor, dem zweiten Verlustfaktor und dem Komprimierungsverlustfaktor und der Distanzfunktion wird ein Totalverlustfaktor gebildet. Der erste Encoder, der erste Decoder, der zweite Encoder und der zweite Decoder werden somit gemeinsam trainiert und werden gemeinsam optimiert auf die Minimierung des Totalverlustfaktors.

Somit wird abweichend vom normalen vorgehen eben nicht jedes Encoder-decoder-Paar einzeln optimiert, sondern es wird ein gemeinsames Training durchgeführt.

Der Vorteil ist, dass der erste Encoder, der erste Decoder, der zweite Encoder und der zweite Decoder mit einer vergleichsweise kleinen Anzahl an Trainingssätzen, bei denen sowohl erste Datensätze und zweite Datensätze zu den gleichen Projekten / Bauplänen existieren, trainieren kann.

Das Ergebnis ist, dass sobald der erste Encoder, der erste Decoder, der zweite Encoder und der zweite Decoder trainiert sind, Daten, die nur als erste Datensätze oder als zweite Datensätze vorliegen, unabhängig von der Quelle in vergleichbare komprimierte Datensätze übertragen werden können. Damit können für das Training eines Systems zum maschinellen Lernen zur Erzeugung von Bauplänen eben viel mehr Trainingsdatensätze bereit gestellt werden.

3D-Informationen oder auch 3D Daten im Sinne der Erfindung sind beispielswiese CAD Daten, welche eine räumliche Form eines Gegenstands oder die Anordnung mehrerer Gegenstände in einem dreidimensionalen Raum umfassen oder repräsentieren, beispielsweise Leitungen, Kabeln oder Rohren in einem dreidimensionalen Raum zeigen. 3D-Informationen liegen daher üblicherweise ausschließlich als computerlesbare Dateien vor. Insbesondere können 3D-Informationen auch zur dreidimensionalen Darstellung an einem Computer genutzt werden.

2D-Informationen oder auch 2D Daten im Sinne der Erfindung sind dagegen nur eine zweidimensionale Wiedergabe der dreidimensionalen Anordnung oder eines dreidimensionalen Gegenstandes. Die 2D Daten können dabei verschiedene Ansichten umfassen, also die zweidimensionale Wiedergabe, die sich aus verschiedenen Blickwinkeln auf die Anordnung oder das Objekt in einem dreidimensionalen Raum ergeben würden. Klassisch wurden solche Planungen auf einem Blatt Papier erstellt, also eine zweidimensionale Darstellung erzeugt. 2D-Informationen können daher sowohl digital aber auch als Zeichnung, insbesondere auf Papier vorliegen. Die 2D-Information enthält daher die zweidimensionale Darstellung, welche zur Erzeugung der realen dreidimensionalen Struktur nötig ist.

Mit anderen Worten gesagt gibt es zwei parallele Module, ein erstes Modul zur Verarbeitung von 2D-Informationen und zweites Modul zur Verarbeitung von 3D-Informationen. Diese Module sind erst einmal wie üblich im Stand der Technik aufgebaut. Über einen Eingang werden die Daten zugeführt. Weiter weist jedes Modul quasi zwei Ausgänge aus. Ein erster Ausgang dient der Ausgabe der komprimierten Daten und ein zweiter Ausgang der entpackten Informationen. Nun werden zum einem für jedes dieser Module zum einen die in den ersten Eingang übergebenen Informationen (2D oder 3D) mit dem am zweiten Ausgang wieder ausgegebenen entpackten Informationen verglichen. Dadurch wird der Verlust ermittelt, welcher innerhalb des Moduls durch Komprimieren und Entpacken entsteht. Zusätzlich erfolgt nun ein Vergleich der am ersten Ausgang des ersten Moduls und der am ersten Ausgang des zweiten Moduls herausgegebenen komprimierten Daten. Hierdurch wird gewährleistet, dass die Komprimierung der 2D-Informationen und der 3D-Informationen jeweils so abläuft, dass die komprimierten Daten unabhängig von der ursprünglichen Datenquelle vergleichbar sind.

Es kann vorgesehen sein, dass dem Eingang zur Zuführung der Daten ein Schritt zur Datenaufbereitung vorgelagert ist, so dass die Daten von dem Modul oder den Modulen verarbeitet werden können. Diese Datenaufbereitung kann beispielsweise das digitalisieren analoger Informationen umfassen, wie einscannen, oder die Daten derart verändert werden, dass die Daten für die Verarbeitung geeignet sind.

Eine Distanzfunktion ist eine bestimmte reellwertige Abbildung metrischer Räume, die die Eigenschaften der zugrunde liegenden Metrik auf einstellige Funktionen übertragen. Das Konzept von Distanzfunktionen wurde 2011 von Chazal, Cohen-Steiner und Mérigot eingeführt. Die Distanzfunktion dient somit dazu, einen "Abstand" mathematisch zu erfassen, also ein einfaches Maß für die "Gleichheit" zu liefern. Im vorliegenden Fall wird zum einen die Distanz, also der Unterschied, zwischen den ursprünglichen Datensätzen und den zunächst komprimierten und dann wieder entpackten Datensätzen ermittelt. Ist die Komprimierung verlustfrei so wäre die Distanz 0. Zum anderen wird die Distanz, also der Unterschied, zwischen den komprimierten Datensätzen ermittelt, welche aus 2D-Daten und 3D-Daten ermittelt wurde. Damit wird mathematisch erfasst, in wie weit die beiden Systeme die Daten auf das gleiche Ergebnis komprimieren. Entscheidend ist nun die Optimierung aller drei zur gleichen Zeit. Würde das nicht erfolgen, so würde man eben zu keinem sinnvollen Ergebnis kommen.

In einer weiteren Ausführungsform der Erfindung durchlaufen die zweiten Datensätze vor der Verarbeitung durch den zweiten Encoder eine statische Datenkomprimierung. Da die zweiten Datensätze 3D Daten enthalten können die zweiten Datensätze sehr groß sein. Dieses kann für ein maschinelles Lernen herausfordernd werden. Daher kann es vorteilhaft sein, die Datenmenge durch eine statische Datenkomprimierung, also eine nicht durch Lernen veränderliche Datenkomprimierung, zu verringern. Hierbei können übliche, dem Fachmann bekannte Verfahren eingesetzt werden. Wesentlich ist jedoch, dass diese unveränderlich sind, also immer in gleicher Wiese angewendet werden. Besonders bevorzugt handelt es sich um eine verlustfreie Datenkomprimierung.

In einer weiteren Ausführungsform der Erfindung ist die Distanzfunktion eine Kosinus-Ähnlichkeit (Cosine Distance, Cosine Similarity, Angular Cosine Distance, Angular Cosine Similarity). Die Kosinus-Ähnlichkeit beträgt 1, sofern die ersten komprimierten Daten und die zweiten komprimierten Daten identisch sind, was der Zielwert ist.

In einer weiteren Ausführungsform der Erfindung werden die ersten Datensätze aus zweiten Datensätzen erzeugt. Hierdurch kann sichergestellt werden, dass die ersten Datensätze und die zweiten Datensätze auch wirklich vergleichbar sind. Hierzu können die zweiten Datensätze in Scheiben geschnitten werden, die dann die ersten Datensätze bilden.

In einer weiteren Ausführungsform betrifft die Erfindung ein Verfahren zum Trainieren eines Systems zum maschinellen Lernen zur Erzeugung von Bauplänen auf einem EDV-System. Das Verfahren verwendet einen ersten Encoder und einen zweiten Encoder, welche nach dem erfindungsgemäßen Verfahren trainiert wurden. Erste Datensätze werden mit Hilfe des ersten Encoders in erste komprimierte Datensätze umgewandelt und die ersten komprimierten Datensätze werden zum Trainieren des Systems zum maschinellen Lernen zur Erzeugung von Bauplänen auf dem EDV-System verwendet. Dieses hat den Vorteil, dass nun die reichhaltig vorhandenen ersten Datensätze für das Training verwendet werden können, also auf eine sehr große Datenbasis zurückgegriffen werden kann, was wiederum den Trainingserfolg verbessert. Es wird also ausgenutzt, dass die Encoder-Decoder-Paare mit vergleichsweise wenig Daten trainierbar sind, für das Systems zum maschinellen Lernen zur Erzeugung von Bauplänen jedoch sehr viele Daten für ein erfolgreiches Training verwendet werden müssen. Hierbei ist der entscheidende Schritt, dass eben nicht die ersten Datensätze selbst für das Training verwendet werden. Dieses würde dazu führen, dass das System am Ende nur 2D Baupläne erzeugen kann. Vielmehr wird durch die komprimierten Datensätze sowohl aus 2D Daten als auch aus 3D Daten trainiert werden und das System kann nach einem Training hauptsächlich mit 2D Daten zur Erzeugung von 3D Daten verwendet werden. Das Systems zum maschinellen Lernen zur Erzeugung von Bauplänen wird auf dem EDV-System gespeichert. Dieses ein notwendiges Zwischenprodukt, um dann mit der künstlichen Intelligenz besonders effiziente Baupläne erstellen zu können und anhand dieser Baupläne dann das Objekt herzustellen.

In einer weiteren Ausführungsform betrifft die Erfindung ein Verfahren zum Erzeugen von Bauplänen mit Hilfe eines Systems zum maschinellen Lernen zur Erzeugung von Bauplänen auf einem EDV-System. Das System zum maschinellen Lernen zur Erzeugung von Bauplänen wurde mit dem erfindungsgemäßen Verfahren trainiert. Durch das System zum maschinellen Lernen zur Erzeugung von Bauplänen werden dritte komprimierte Datensätze erzeugt. Der zweite Decoder wird zur Umwandlung der dritten komprimierten Datensätze in dritte Datensätze verwendet. Es wesentliche ist somit, dass das Systems zum maschinellen Lernen in dem komprimierten Datenraum durchgeführt, beispielsweise und insbesondere im latent space. Erst anschließend erfolgt dann eine Konvertierung durch den Decoder in das für die Fertigung benötigte Format. Die dritten Datensätze werden gespeichert, ausgegeben oder zur Maschinenansteuerung zur Fertigung entsprechend der Baupläne der dritten Datensätze verwendet. Die so erzeugten dritten Datensätze sind nun echte 3D-Baupläne, welche direkt zur Erstellung eines Objekts nach diesen optimierten Bauplänen genutzt werden. Somit führen alle erfindungsgemäßen Zwischenprodukte am Ende zu einem neuen, aufgrund der breiteren Datenbasis optimierten Objekt, beispielsweise einem Unterseeboot mit einer besonders effizienten Verkabelung.

In einer weiteren Ausführungsform betrifft die Erfindung ein Verfahren zum Erzeugen von 3D-Informationen aus 2D-Informationen. Beispielswiese für bestehende Wasserfahrzeuge liegen größtenteils nur 2D-Informationen, teilweise auch nur als Papierausdrucke vor. Im Falle einer Reparatur oder Modernisierung kann es aber aufgrund der aktuellen Fertigungstechniken notwendig sein, 3D-Informationen bereitzustellen. Daher kann nach einem Training der Encoder und Decoder ein erster Datensatz mit 2D-Informationen in den ersten Encoder auf der Basis eines neuronalen Netzwerkes eingebracht und in einen ersten komprimierten Datensatz in einen latenten Merkmalsraum übertragen werden. Der erste komprimierte Datensatz wird anschließend mit dem zweiten Decoder in zweiten entpackten Datensatz und damit in einen 3D-Datensatz umgewandelt werden. Dieser kann dann beispielsweise für eine Reparatur oder Modernisierung verwendet werden.

In einem weiteren Aspekt betrifft die Erfindung ein Objekt, welches nach einem Bauplan hergestellt wurde, wobei der Bauplan nach dem erfindungsgemäßen Verfahren erzeugt wurde.

Besonders bevorzugt ist das Objekt ein Wasserfahrzeug, bevorzugt ein Unterseeboot, und nach dem Verfahren hinsichtlich bevorzugt der Verkabelung und/oder Fluidleitungen, insbesondere Wasserleitungen und/oder Hydraulikleitungen und/oder Pneumatikleitungen, optimiert. Hierfür werden als erste Datensätze und zweite Datensätze entsprechende Baupläne von Wasserfahrzeugen, insbesondere Unterseebooten, beispielsweise mit Plänen zur der Verkabelung und/oder Fluidleitungen, insbesondere Wasserleitungen und/oder Hydraulikleitungen und/oder Pneumatikleitungen, verwendet.

Nachfolgend ist das erfindungsgemäße Verfahren anhand eines in den Zeichnungen dargestellten Ausführungsbeispiels näher erläutert.
- Fig. 1: Training der Encoder und Decoder
- Fig. 2: Training der künstlichen Intelligenz
- Fig. 3: Benutzung der künstlichen Intelligenz

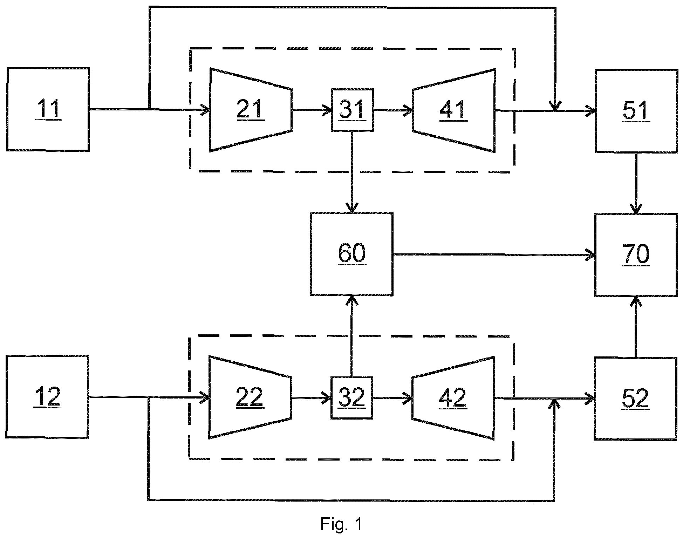

In Fig. 1 ist das Verfahren zur Bereitstellung einheitlicher Trainingsdaten zur Training einer künstlichen Intelligenz dargestellt. Beispielsweise liegen aus bisher durchgeführten Projekten erste Datensätze 11 als 2D Daten und zweite Datensätze 12 als 3D Daten vor. Aus der Vergangenheit gibt es darüber hinaus zumeist weitere erste Datensätze 11, zu denen es keine korrelierenden zweiten Datensätze 12 gibt. Sinn ist es gerade auch diese in einem weiteren Schritt verwenden zu können. Zunächst werden aber korrelierende erste Datensätze 11 und zweite Datensätze 12 verwendet, also Datensätze die den gleichen Bauplan, nur einmal in 2D und einmal in 3D zeigen.

Die ersten Datensätze 11 werden mit Hilfe eines ersten Encoders 21 auf der Basis eines neuronalen Netzwerkes zu ersten entpackten Datensätzen 31 umgewandelt und anschließend mit einem ersten Decoder 41 wieder zu ersten entpackten Datensätzen entpackt. Anschließend werden die ersten Datensätze 11 mit den ersten entpackten Datensätzen verglichen und so ein erster Verlustfaktor 51 ermittelt.

Die zweiten Datensätze 12 werden mit Hilfe eines zweiten Encoders 22 auf der Basis eines neuronalen Netzwerkes zu zweiten entpackten Datensätzen 32 umgewandelt und anschließend mit einem zweiten Decoder 41 wieder zu zweiten entpackten Datensätzen entpackt. Anschließend werden die zweiten Datensätze 12 mit den zweiten entpackten Datensätzen verglichen und so ein zweiter Verlustfaktor 52 ermittelt.

Zusätzlich werden die ersten komprimierten Datensätze 31 und die zweiten komprimierten Datensätze 32 zur Bildung einer Distanzfunktion 60 verglichen. Aus der Distanzfunktion 60 sowie dem ersten Verlustfaktor 51 und dem zweiten Verlustfaktor 52 wird ein Totalverlustfaktor 70 gebildet.

Das Training der neuronalen Netzwerke des ersten Encoders 21, des zweiten Encoders 22, des ersten Decoders 41 und des zweiten Decoders 42 erfolgt nun auf eine Minimierung des Totalverlustfaktors 70. Dieses Training kann im Vergleich zu dem Training eines Systems zum maschinellen Lernen zur Erzeugung von Bauplänen mit vergleichsweise wenigen korrelierenden Datensätzen trainiert werden.

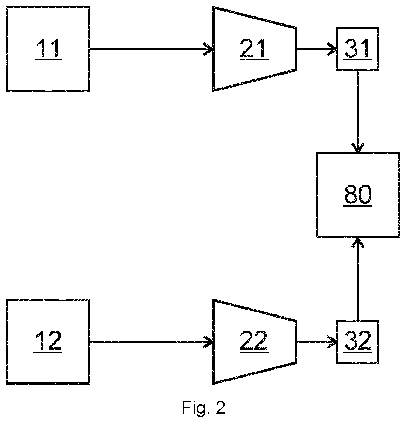

Fig. 2 zeigt nun das Training des Systems zum maschinellen Lernen zur Erzeugung von Bauplänen 80. Aus dem vorhergehenden Schritt sind der erste Encoder 21 und der zweite Encoder 22 trainiert. Jetzt können beliebige ersten Datensätze 11 und zweite Datensätze 12 verwendet werden, wobei diese nicht jeweils korrelierend vorliegen müssen. Vielmehr ist es dadurch nun möglich, auf die Vielzahl an vorhandenen ersten Datensätzen 11 aus historischen Projekten zuzugreifen und so die Lernbasis für das System zum maschinellen Lernen zur Erzeugung von Bauplänen 80 stark zu erweitern. Das Besondere ist hierbei, dass die Datensätze eben nicht direkt zum Lernen verwendet werden, sondern zunächst beispielsweise in ein latent space transferiert werden. Dadurch wird es möglich, de gleiche Basis sowohl aus 2D-Daten als auch aus 3D-Daten zu erhalten, sodass das Training unabhängig von der Art zu einem System zum maschinellen Lernen zur Erzeugung von Bauplänen 80 führt, welches auch bei einem Training mit hauptsächlich 2D-Daten 3D-Daten erzeugen kann.

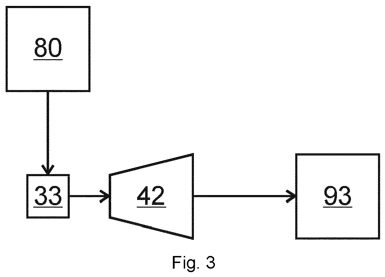

In Fig. 3 ist dann die Verwendung des Systems zum maschinellen Lernen zur Erzeugung von Bauplänen 80 gezeigt. Mit Vorgaben werden dann unter Nutzung des angelernten Wissens zunächst dritte komprimierte Datensätze 33 erzeugt, die dann mit dem zweiten Decoder 42 in dritte Datensätze 93 und damit in 3D Baupläne umgesetzt werden.

### Bezugszeichen

- 11: erste Datensätze
- 12: zweite Datensätze
- 21: erster Encoder
- 22: zweiter Encoder
- 31: erste komprimierte Datensätze
- 32: zweite komprimierte Datensätze
- 33: dritte komprimierte Datensätze
- 41: erster Decoder
- 42: zweiter Decoder
- 51: erster Verlustfaktor
- 52: zweiter Verlustfaktor
- 60: Distanzfunktion
- 70: Totalverlustfaktor
- 80: Systems zum maschinellen Lernen zur Erzeugung von Bauplänen
- 93: dritte Datensätze

## Patentansprüche

1. Verfahren zur Bereitstellung einheitlicher Trainingsdaten zur Training einer künstlichen Intelligenz auf einem EDV-System, wobei erste Datensätze (11) und zweite Datensätze (12) dem EDV-System bereitgestellt werden, wobei die ersten Datensätze (11) 2D-Informationen enthalten und wobei die zweiten Datensätze (12) 3D-Informationen enthalten, wobei die ersten Datensätze (11) durch einen ersten Encoder (21) auf der Basis eines neuronalen Netzwerkes in einen latenten Merkmalsraum als erste komprimierte Datensätze (31) übertragen werden, wobei die ersten komprimierten Datensätze (31) durch einen ersten Decoder (41) auf der Basis eines neuronalen Netzwerkes zu ersten entpackten Datensätzen umgewandelt werden, wobei die ersten Datensätze (11) mit den ersten entpackten Datensätzen zur Bestimmung eines ersten Verlustfaktors (51) verglichen werden, wobei die zweiten Datensätze (12) durch einen zweiten Encoder (22) auf der Basis eines neuronalen Netzwerkes in einen latenten Merkmalsraum als zweite komprimierte Datensätze (32) übertragen werden, wobei die zweiten komprimierten Datensätze (32) durch einen zweiten Decoder (42) auf der Basis eines neuronalen Netzwerkes zu zweiten entpackten Datensätzen umgewandelt werden, wobei die zweiten Datensätze (12) mit den zweiten entpackten Datensätzen (32) zur Bestimmung eines zweiten Verlustfaktors (52) verglichen werden, wobei die ersten komprimierten Datensätze (31) mit den zweiten komprimierten Datensätzen (32) zur Bestimmung einer Distanzfunktion (60) verglichen werden, wobei der trainierte erste Encoder (21), der trainierte zweite Encoder (22) und der trainierte zweite Decoder (42) auf dem EDV-System gespeichert werden.

2. Verfahren nach Anspruch 1, **dadurch gekennzeichnet, dass** ein Komprimierungsverlustfaktor ermittelt wird, wobei aus dem ersten Verlustfaktor (51), dem zweiten Verlustfaktor (52) und dem Komprimierungsverlustfaktor und der Distanzfunktion (60) ein Totalverlustfaktor (70) gebildet wird, wobei der erste Encoder (21), der erste Decoder (41), der zweite Encoder (22) und der zweite Decoder (42) gemeinsam trainiert und optimiert werden auf die Minimierung des Totalverlustfaktors (70).

3. Verfahren einem der vorstehenden Ansprüche, **dadurch gekennzeichnet, dass** die zweiten Datensätze (12) vor der Verarbeitung durch den zweiten Encoder (22) eine statische Datenkomprimierung durchlaufen.

4. Verfahren nach einem der vorstehenden Ansprüche, **dadurch gekennzeichnet, dass** die Distanzfunktion (60) eine Kosinus-Ähnlichkeit ist.

5. Verfahren nach einem der vorstehenden Ansprüche, **dadurch gekennzeichnet, dass** die ersten Datensätze (11) aus zweiten Datensätzen (12) erzeugt werden.

6. Verfahren zum Trainieren eines Systems zum maschinellen Lernen zur Erzeugung von Bauplänen (80) auf einem EDV-System, wobei das Verfahren einen ersten Encoder (21) und einen zweiten Encoder (22) verwendet, welche nach dem Verfahren nach einem der vorstehenden Ansprüche trainiert wurden, wobei erste Datensätze (11) mit Hilfe des ersten Encoders (21) in erste komprimierte Datensätze (31) umgewandelt werden, wobei die ersten komprimierten Datensätze (31) zum Trainieren des Systems zum maschinellen Lernen zur Erzeugung von Bauplänen (80) auf dem EDV-System verwendet werden, wobei das Systems zum maschinellen Lernen zur Erzeugung von Bauplänen (80) auf dem EDV-System gespeichert wird.

7. Verfahren zum Erzeugen von Bauplänen mit Hilfe eines Systems zum maschinellen Lernen zur Erzeugung von Bauplänen (80) auf einem EDV-System, wobei das System zum maschinellen Lernen zur Erzeugung von Bauplänen (80) mit dem Verfahren nach Anspruch 6 trainiert wurde, wobei durch das System zum maschinellen Lernen zur Erzeugung von Bauplänen (80) dritte komprimierte Datensätze (33) erzeugt werden, wobei der zweite Decoder (42) zur Umwandlung der dritten komprimierten Datensätze (33) in dritte Datensätze (93) verwendet wird, wobei die dritten Datensätze (93) gespeichert, ausgegeben oder zur Maschinenansteuerung verwendet werden zur Fertigung entsprechend der Baupläne der dritten Datensätze (93).
